# EUROPEAN PATENT APPLICATION

(11) **EP 1 898 110 A1**
(43) Date of publication of application: **12.03.2008**
(21) Application number: 06746849.6
(22) Date of filing: 25.05.2006
(51) Int. Cl.: F16D 3/04

(54) **SHAFT COUPLING**

(30) Priority: 26.05.2005 JP 2005154090
(71) Applicant: NTN Corporation, Osaka-shi, Osaka 550-0003 (JP); Bridgestone Corporation, Tokyo 104-8340 (JP)
(72) Inventor: UTSUNOMIYA, Satoshi, c/o NTN Corporation, Iwata-shi, Shizuoka 438-0037 (JP)
(74) Representative: Grünecker, Kinkeldey, Stockmair & Schwanhäusser Anwaltssozietät
(86) International application number: PCT/JP2006/310470
(87) International publication number: WO 2006/126644

(57) **Abstract**

An object is to provide a shaft coupling of the type in which power is transmitted between two parallel shafts through rolling elements each disposed at the intersecting portion of two guide grooves that intersect each other at a right angle which always operates stably.

The rolling elements 3 are cylindrically shaped, and have both ends thereof guided by the respective guide grooves 5 and 6 of the plates 1 and 2 with their central portions each passed through and held by an elongated hole 7 formed in the retainer 4, and sliders 10 are provided each extending from the outer periphery of one of the rolling elements 3 in the shape of a flange and engaging the retainer 4, thereby preventing each rolling element 3 from pivoting in a plane including an axis of the rolling element. With this arrangement, it is possible to prevent forces in the axial direction of the rotary members from acting on the rolling elements, thereby preventing axial movements of the rotary members. Also with this arrangement, because the rolling elements 3 are kept parallel to the axis of the rotary members, the rolling elements 3 never get stuck in the guide grooves 5 and 6. The shaft coupling can thus be always stably operated.

## Description

### TECHNICAL FIELD

The present invention relates to a shaft coupling through which two parallel shafts are adapted to be coupled together for transmitting power therebetween.

### BACKGROUND ART

Shaft couplings through which two shafts of an ordinary machine are coupled together for transmitting power from the driving shaft to the driven shaft are classified, according to the positional relationship between the two shafts to be coupled together, into the type in which the two shafts are aligned with each other, the type in which the two shafts cross each other, and the type in which the two shafts are parallel to (and not aligned with) each other.

Among shaft couplings of the type that couples two parallel shafts together, Oldham couplings are well known. But Oldham couplings have problems that large power cannot always be transmitted smoothly due to poor lubrication between the frictional surfaces of sliders disposed between the two shafts, and that no large (diametrical) offset of the two shafts is permissible.

As couplings other than Oldham couplings, a mechanism has been proposed which comprises a plate inserted between two axially opposed rotary members (disks), and linear-motion guides that are provided at a plurality of points of the front and back sides of the plate such that the operational direction of each guide on the front side crosses the operational direction of the corresponding guide on the back side at a right angle, whereby power is transmitted between the rotary members through the plate and the linear-motion guides (see Patent document 1).

With this arrangement, it is possible to obtain a necessary offset amount simply by changing the length of the linear-motion guides. Also, by providing a plurality of steel balls between the relatively moving surfaces in the linear-motion guides, it is possible to smoothly transmit large power. But because a large number of linear-motion guides are necessary, the manufacturing cost is very high. Also, it is difficult to mount the linear-motion guides with high accuracy, so that it is extremely troublesome and time-consuming to mount them.

The present applicant therefore proposed, before the present invention, a shaft coupling of the type in which power is transmitted between two parallel shafts through rolling elements each disposed at the intersecting portion of two guide grooves that intersect each other at a right angle (JP Patent application No. 2004-183559).

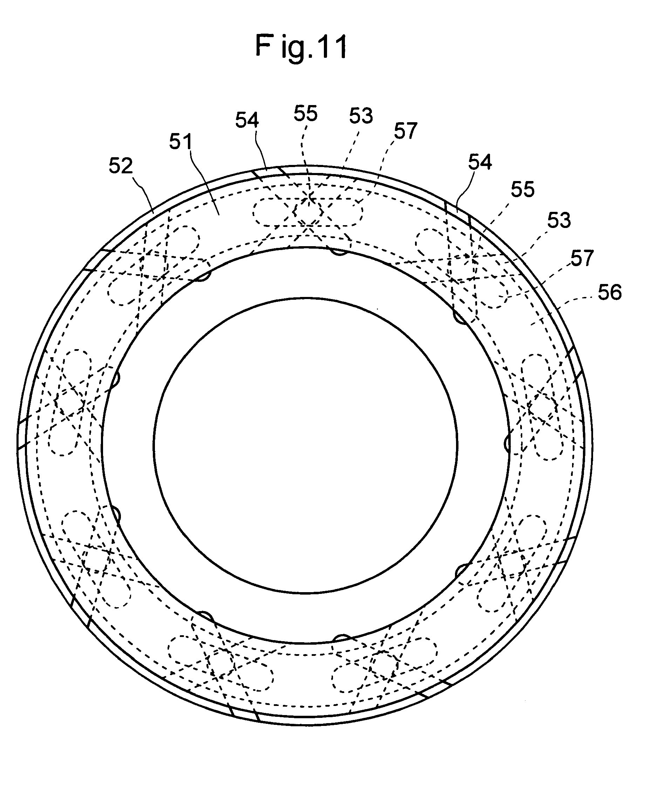

Fig. 11 shows a shaft coupling of this type. This shaft coupling comprises two axially opposed rotary members 51 and 52 having opposed surfaces formed with a plurality of guide grooves 53, 54 each intersecting the opposed groove at a right angle, and rolling elements 55 each disposed at the intersecting portion of an opposed pair of the guide grooves and received in an elongated hole 57 formed in a retainer 56. For simplicity, the rotary members 51 and 52 are shown to be coaxial in Fig. 11. But ordinarily, the rotary shafts are arranged with their rotation axes offset from each other.

The rolling elements 55 are pushed by the driving rotary member 51 with their movement in the diametrical direction of the rotary members restricted by the retainer 56. The rolling elements 55 thus push the driven rotary member 52 while rolling in the guide grooves 53 and 54 and the elongated holes 57 of the retainer, thereby transmitting power. Since frictional resistance while power is being transmitted is small, large power can be transmitted. Also, it is possible to obtain a necessary offset amount simply by changing the lengths of the guide grooves 53 and 54 and the elongated holes 57 of the retainer 56. Also, because between the rotary members 51 and 52, only the rolling elements 55 and the retainer 56 are provided, this shaft coupling can be manufactured at a low cost and can be assembled easily.

With this type of shaft coupling, if the rolling elements are spherical members, because the spherical members contact the guide grooves at a certain contact angle, an axial force proportional to the torque to be transmitted is produced that tends to separate the rotary members from each other. Thus, it is preferable to provide an axial movement preventive mechanism for preventing axial movements while power is being transmitted, thereby preventing a change in axial gap between the rotary members. But the provision of such an axial movement preventive mechanism complicates the structure of the entire shaft coupling. Also, because frictional resistance is produced at its portions in contact with the rotary members, the rotary members may not be smoothly slidable.

On the other hand, if the rolling elements are rollers (cylindrical members), since the rollers, which are mounted in parallel to the axis of the rotary members, are brought into contact at their radially outer surfaces with the inner side surfaces of the guide grooves, a force in the axial direction of the rotary members is not produced while power is being transmitted, so that the rotary members do not move axially. This eliminates the necessity for the above-described axial movement preventive mechanism, which in turn simplifies the structure of the entire shaft coupling. Also, the rotary members can smoothly slide relative to each other. But because the points at which forces from the rotary members and the retainer are applied to the rollers, as well as the directions of these forces are not aligned with each other, turning moments are applied to the rollers, so that the rollers tend to incline relative to the axis of the rotary members and thus tend to get stuck in the guide grooves.

Further, irrespective of whether the rolling elements are spherical or cylindrical, because the rolling elements simultaneously contact the guide grooves of the rotary members and the elongated holes of the retainer, at least at one contact point, the rolling elements slip, which increases resistance when the rotary members slide relative to each other.
Patent document 1: JP Patent publication 2003-260902A

### DISCLOSURE OF THE INVENTION

### OBJECT OF THE INVENTION

An object of the present invention is to provide a shaft coupling of the type in which power is transmitted between two parallel shafts through rolling elements each disposed at the intersecting portion of two guide grooves that intersect each other at a right angle which always operates stably.

### MEANS TO ACHIEVE THE OBJECT

In order to achieve this object, according to the present invention, the rolling elements are cylindrically shaped, and have both ends thereof guided by the respective guide grooves with their central portions each passed through and held by an elongated hole formed in the retainer, and sliders are provided each extending from the outer periphery of one of the rolling elements in the shape of a flange and engaging the retainer, thereby preventing each rolling element from pivoting in a plane including an axis of the rolling element. By cylindrically forming the rolling elements, and providing sliders on the outer periphery thereof so as to engage the retainer, it is possible to prevent forces in the axial direction of the rotary members from acting on the rolling elements, thereby preventing axial movements of the rotary members. This eliminates the necessity for an axial movement preventive means. Also with this arrangement, because the rolling elements are kept parallel to the axis of the rotary members, the rolling elements never get stuck in the guide grooves.

In the above arrangement, by providing a slide member or a linear-motion bearing between each slider and the retainer, the sliders and the rolling elements can smoothly move relative to the retainer.

The sliders may each comprise at least two rolling bearings each provided at one end of the corresponding rolling element, and comprising an outer ring that rolls in the corresponding elongated hole while being in engagement with an edge of the elongated hole, and an inner ring that is joined to the inner ring of the other rolling bearing. With this arrangement, because the plurality of rolling bearings support not only turning moments applied to the rolling elements, but normal forces in the diametrical direction of the rotary members applied from the retainer to the rolling elements, the sliders and the rolling elements can more smoothly slide relative to the retainer.

Preferably, rolling bearings are fitted on each of the rolling elements at both ends and central portion thereof, whereby the respective rolling elements are in rolling contact with the guide grooves of the rotary members and the elongated holes formed in the retainer through the rolling bearings. With this arrangement, it is possible to further reduce resistance produced when the rolling elements move relative to the guide grooves and the elongated holes of the retainer.

### ADVANTAGES OF THE INVENTION

According to this invention, as described above, by cylindrically forming the rolling elements, and providing sliders on the outer periphery thereof so as to engage the retainer, it is possible to prevent forces in the axial direction of the rotary members from acting on the rolling elements, thereby preventing axial movements of the rolling elements. This eliminates the necessity for an axial movement preventive means. Also with this arrangement, because the rolling elements are kept parallel to the axis of the rotary members, the rolling elements never get stuck in the guide grooves. Thus, the shaft coupling can be always stably operated.

By bringing the rolling elements into rolling contact with the guide grooves of the rotary members and the elongated holes of the retainer through rolling bearings, it is possible to further reduce resistance produced when the rolling elements move relative to the guide grooves and the elongated holes of the retainer, so that the rotary members can more smoothly slide relative to each other. It is also possible to reduce heat buildup due to friction between the rolling elements and the rotary members and between the rolling elements and the retainer. Because there are no slide contact portions, it is possible to reduce damage such as seizure even during high-speed rotation or when large power is transmitted.

### BRIEF DESCRIPTION OF THE DRAWINGS

Fig. 1 is a side view of a shaft coupling of a first embodiment (rotation axes are aligned).
Fig. 2a is a sectional view taken along line IIa-IIa of Fig. 1, and Fig. 2b is a sectional view taken along line IIb-IIb of Fig. 1.
Fig. 3 is a side view of the shaft coupling of Fig. 1, showing its use state (rotation axes are offset).
Fig. 4 is a sectional view taken along line IV-IV of Fig. 3.
Fig. 5 is a side view of a shaft coupling of a second embodiment (rotation axes are aligned).
Fig. 6a is a sectional view taken along line VIa-VIa of Fig. 5, and Fig. 6b is a sectional view taken along line VIb-VIb of Fig. 5.
Fig. 7 is a side view of a shaft coupling of a third embodiment (rotation axes are aligned).
Fig. 8a is a sectional view taken along line VIIIa-VIIIa of Fig. 7, and Fig. 8b is a sectional view taken along line VIIIb-VIIIb of Fig. 7.
Fig. 9 is a side view of a shaft coupling of a fourth embodiment (rotation axes are aligned).
Fig. 10a is a sectional view taken along line Xa-Xa of Fig. 9, and Fig. 10b is a sectional view taken along line Xb-Xb of Fig. 9.
Fig. 11 is a side view of a conventional shaft coupling (rotation axes are aligned).

### DESCRIPTION OF NUMERALS

- 1, 2.: Plate
- 3.: Rolling element
- 4.: Retainer
- 5, 6.: Guide groove
- 7.: Elongated hole
- 8.: Guide rail
- 9.: Ball bearing
- 10.: Slider
- 11.: Linear-motion bearing
- 12.: Bridge member
- 13.: Ball bearing
- 14.: Slider
- 15.: Linear-motion bearing
- 16.: Rolling bearing
- 17.: Bridge member
- 18.: Slider
- A.: Input shaft
- B.: Output shaft

### BEST MODE FOR EMBODYING THE INVENTION

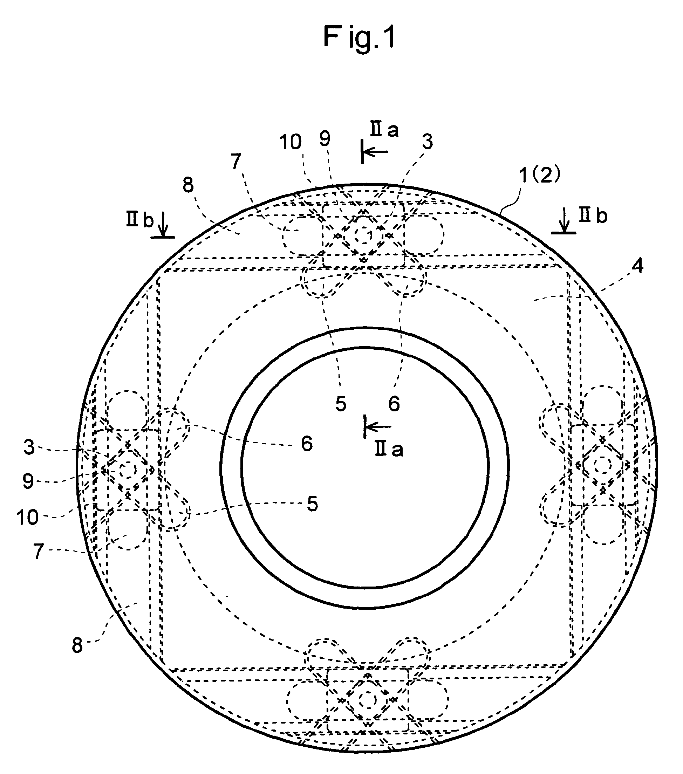

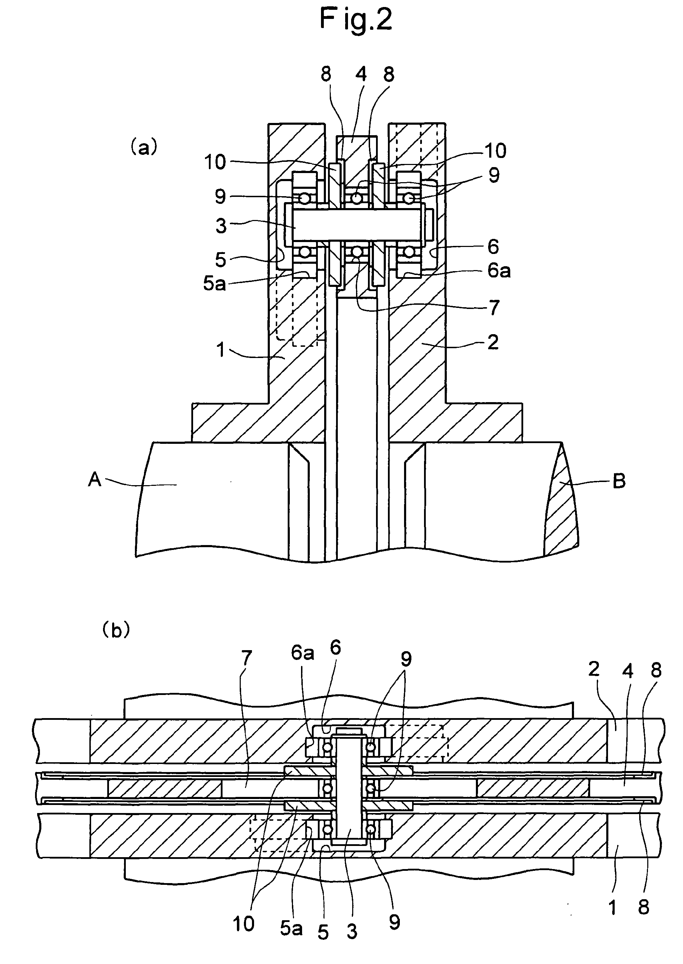

The embodiments of the present invention are now described with reference to Figs. 1 to 10. Figs. 1 to 4 show a shaft coupling according to the first embodiment. As shown in Fig. 1 and Figs. 2(a), 2(b), this shaft coupling includes axially opposed plates 1 and 2 as rotary members that are fitted, respectively, on opposed ends of input and output shafts A and B having rotation axes that are parallel to each other and diameters that are equal to each other. Disposed between the plates 1 and 2 are a plurality of cylindrical rolling elements 3 and a retainer 4 that restricts radial movements of the respective rolling elements 3. Power is transmitted between the plates 1 and 2 through the rolling elements 3. For simplicity, Fig. 1 shows the input and output shafts A and B as being coaxial. But actually, the input and output shafts A and B are ordinarily arranged with their rotation axes offset from each other.

The plates 1 and 2 are doughnut-shaped disks each having a cylindrical portion formed on its radially inner portion and fitted on one of the opposed ends of the input and output shafts A and B. The plates 1 and 2 are thus fixed in position so as to axially face each other. Four guide grooves 5 are formed in one of the surfaces of the plates 1 and 2 that face each other at circumferentially equal intervals. Four guide grooves 6 are formed in the other of the opposed surfaces, each axially facing and intersecting one of the grooves 5 at a right angle. At the intersection of each pair of the guide grooves 5 and 6, one of the rolling elements 3 is mounted so as to extend parallel to the axes of the plates.

The guide grooves 5 and 6 linearly extend at an angle of 45 degrees with respect to the diametrical direction of the plates. In the inner side wall of each of the guide grooves 5 and 6, a recess 5a, 6a having a predetermined depth is formed. Each opposed pair of the recesses 5a and 6a guide the respective ends of one rolling element 3.

The retainer 4 is an annular member formed with four elongated holes 7 that are circumferentially spaced from each other at equal intervals and extending linearly at a right angle with respect to the diametrical direction of the retainer. Each rolling element 3 is held in position in one of the elongated holes 7 by passing its central portion through the hole 7. In both sides of the retainer 4, recesses are formed along the edges of the respective elongated holes 7 so as to extend in the same directions as the elongated holes 7. Guide rails 8 are mounted in the respective recesses.

Ball bearings 9 as rolling bearings are fitted on the outer periphery of each rolling element 3 at its both ends and central portion, respectively. The rolling element 3 is thus in rolling contact with the recesses 5a and 6a of the guide grooves 5 and 6 and the elongated hole of the retainer 4 through the respective ball bearings 9. Between the ball bearings 9, sliders 10 are provided which are in the shape of flat plates extending from the rolling element 3 like flanges and mounted to the retainer 4 so as to be in sliding contact with the respective guide rails 8. The sliders 10 prevent pivoting motion of the rolling element 3 in a plane including the axis of the rolling element 3. The respective ball bearings 9 and the respective sliders 10 are fixed in position by an overhang at one end of the rolling element 3, a snap ring fitted in the other end of the rolling element 3, spacers, screws, etc.

The mechanism of transmission of power by this shaft coupling is now described. When the input shaft A is driven, the plate 1, which is fixed to the shaft A, rotates, so that the rolling elements 3 are pushed by the guide grooves 5 of the plate 1 on the input side from the circumferential direction. The rolling elements 3 thus push the guide grooves 6 of the plate 2, which is fixed to the output shaft B, with the rolling elements 3 prevented from moving radially, thereby turning the plate 2 on the output side. Power is thus transmitted to the output shaft B. Power is transmitted in the same manner as above irrespective of the rotational direction of the shaft A. Also, power can be transmitted in the same manner as above from the shaft B to shaft A too.

At this time, because the points of each rolling element 3 at which the forces from the plates 1 and 2 and the retainer 4 act are not aligned, and also the directions of these forces are not the same, a rotational moment is produced. But because each rolling element 3 is prevented from pivoting in a plane including its axis by the sliders 10 and the retainer 4, which are in engagement with each other, the rolling elements 3 are kept parallel to the axis of the plates. While rotational moments from the respective rolling elements 3 act on the retainer 4 through the sliders 10, since these moments are substantially of the same strength and different in direction from each other, the entire retainer 4 never incline relative to the plates 1 and 2.

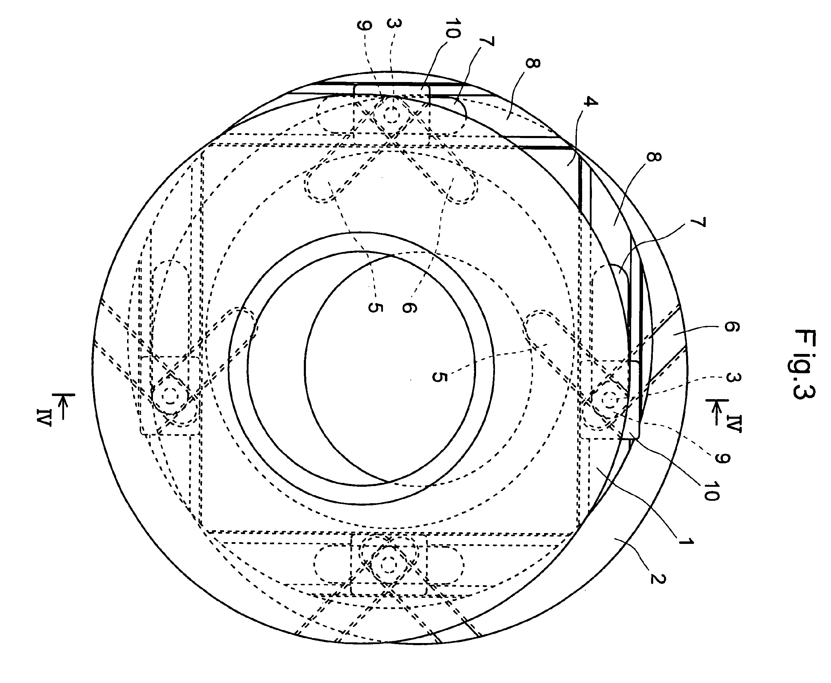

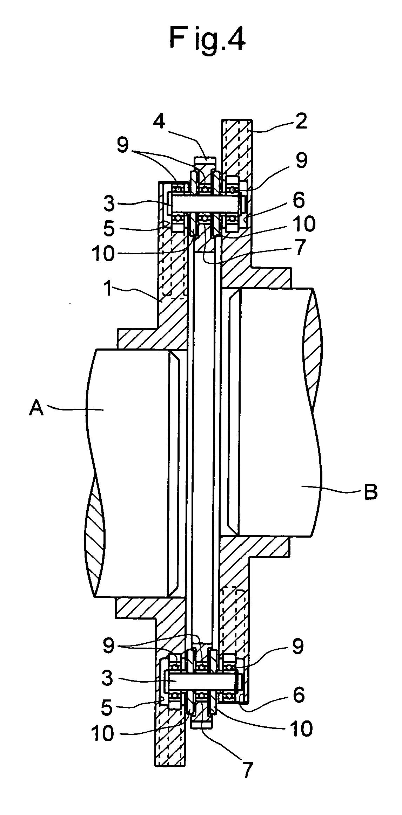

In an ordinary state of use shown in Figs. 3 and 4, in which the rotation axes of the plates 1 and 2 are offset from each other, power is transmitted basically in the same manner as described above. In the state of Figs. 3 and 4, because the rotation axes of the plates 1 and 2 are offset, the respective pairs of guide grooves 5 and 6 intersect at circumferentially different portions from each other. This means that while power is being transmitted between the plates, the respective rolling elements 3 move in the guide grooves 5 and 6 and the elongated holes 7 formed in the retainer 4. In this state, the sliders 10 also move linearly relative to the retainer 4 in the longitudinal direction of the respective elongated holes 7 while being guided by the guide rails 8.

With this shaft coupling, because the rolling elements 3 are cylindrical members, no force acts on the rolling elements in the direction of the axis of the plates while power is being transmitted, so that the rotary members are less likely to move in the axial direction. This eliminates the need for a mechanism for preventing axial movements of the rotary members, which are necessary if the rolling elements are spherical members. This in turn simplifies the structure of the entire device, and also reduces the frictional resistance between the plates 1 and 2 when the plates slide relative to each other. Also, because the sliders 10, which are provided around the respective rolling elements 3 so as to engage the retainer 4, prevent inclination of the rolling elements 3 relative to the axis of the plates, the rolling elements 3 never get stuck in the guide grooves 5 and 6. This ensures stable operation of the coupling.

Because the slide members (guide rails 8) are provided between the sliding portions of the retainer 4 and the respective sliders 10, thereby reducing the resistance to movement of the sliders 10 relative to the retainer 4, and because the rolling elements 3 are in rolling contact with the guide grooves 5 and 6 and the retainer 4 through the ball bearings, thereby reducing the resistance to movement of the rolling elements 3 relative to the guide grooves 5 and 6 and the elongated holes 7 of the retainer 4, the plates can smoothly slide relative to each other.

In the above embodiment, the rolling bearings fitted around the respective rolling elements are ball bearings. But they may be roller bearings. In the embodiment, the slide members provided between the retainer and the sliders are mounted to the retainer. But instead, the slide members may be mounted to the sliders.

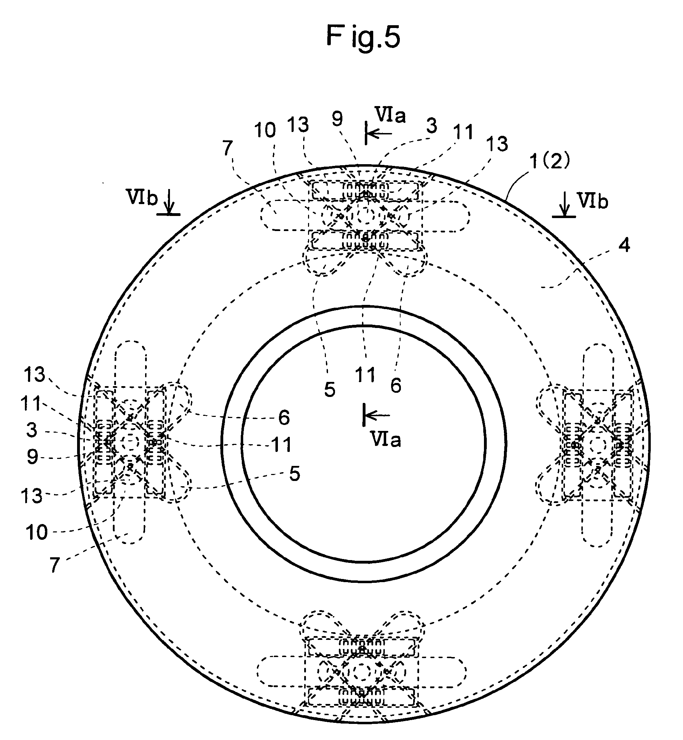

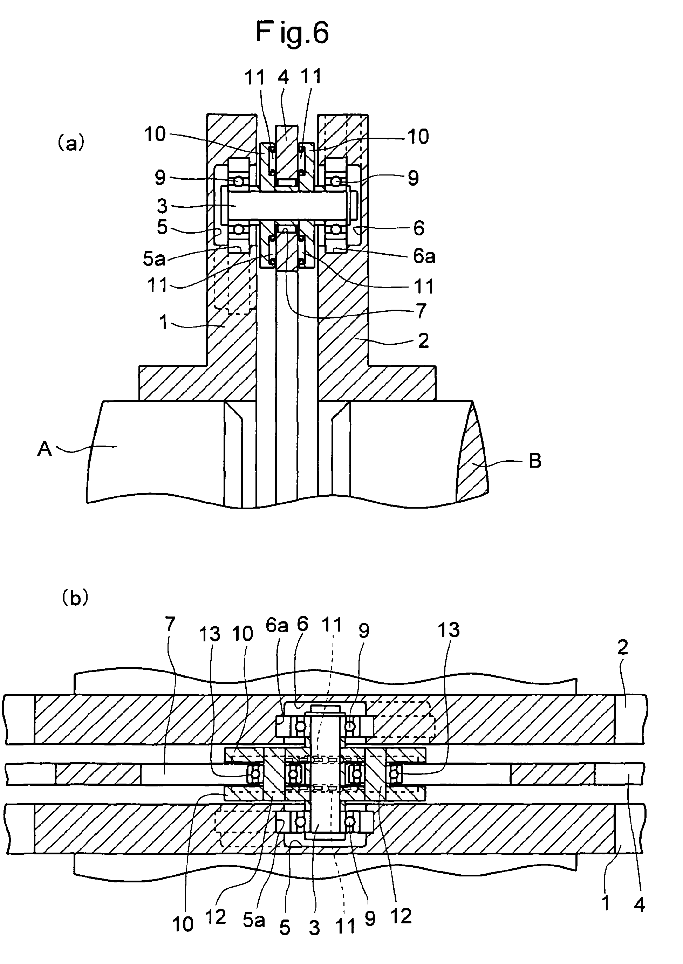

Figs. 5, 6(a) and 6(b) show the second embodiment. The shaft coupling of this embodiment is basically of the same structure as the first embodiment and differs therefrom in that instead of mounting the slide members (guide rails 8) in the recesses formed in both sides of the retainer 4, a linear-motion bearing 11 is received in each of two recesses formed in the inner surface of each slider 10 so as to extend along the elongated hole 7 of the retainer 4. The linear-motion bearings 11 used here comprise a retainer in the shape of a flat plate, and a needle roller mounted therein. The two sliders 10 are coupled together by two bridge members 12 that extend across the elongated hole 7 of the retainer 4 on both sides of the rolling element 3 with a ball bearing 13 fitted around each bridge member 12 so as to abut the elongated hole. The bridge members 12 thus prevent pivoting motion of the sliders 10 and also supports turning moments that act on the rolling elements 3 as well as normal forces in the diametric direction of the plates that are applied from the retainer 4 to the rolling elements 3.

In this embodiment, because the respective sliders 10 are in rolling contact with the retainer 4, the plates 1 and 2 can slide relative to each other more smoothly than in the first embodiment.

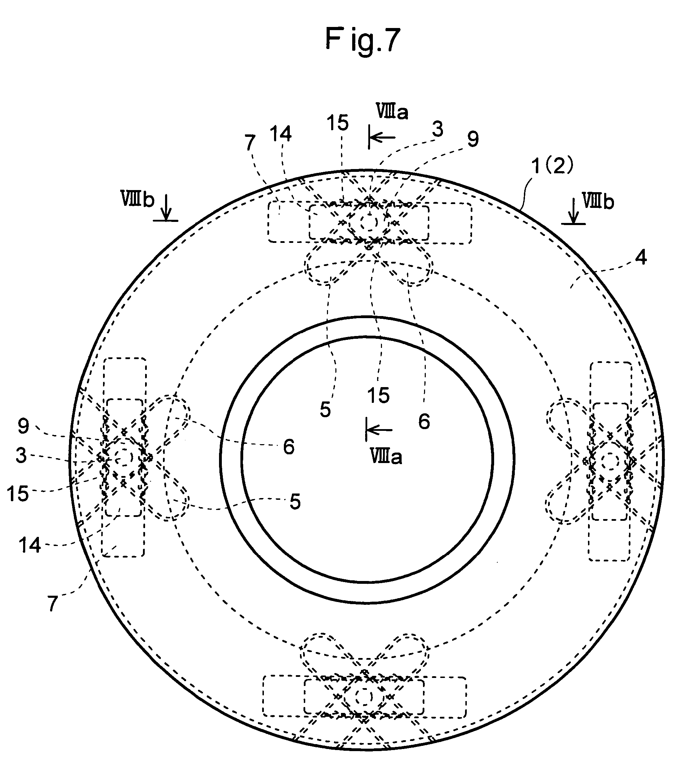

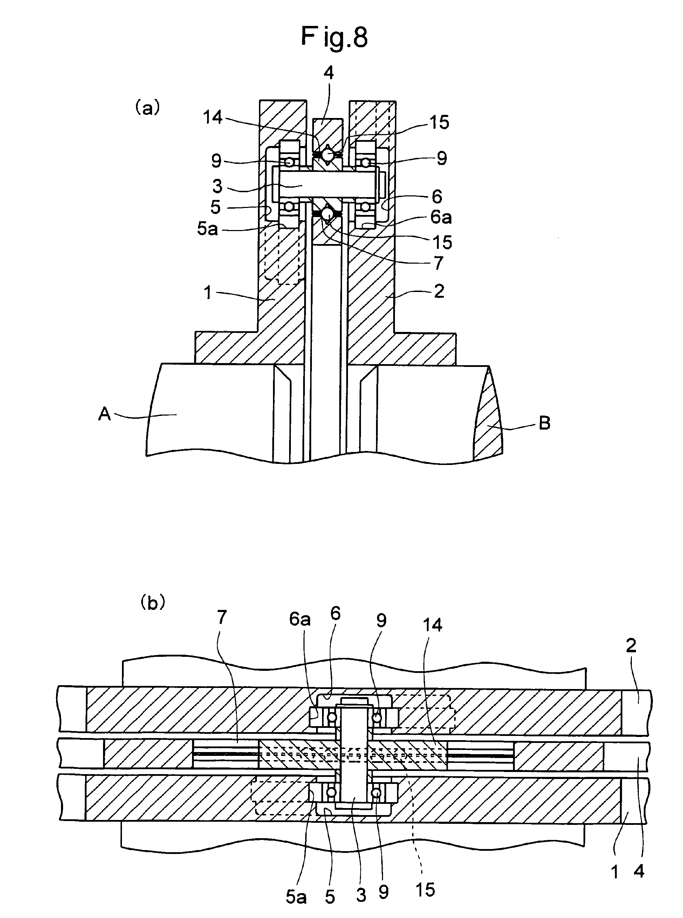

Figs. 7, 8(a) and 8(b) show the third embodiment. The shaft coupling of this embodiment is basically of the same structure as the first embodiment and differs therefrom in that instead of the sliders 10 on both sides of the retainer 4, the guide rails 8 for guiding the sliders 10, and the ball bearing 9 fitted on the central portion of each rolling element 3, a slider 14 is received in the elongated hole 7 of the retainer 4, and a linear-motion bearing 15 is provided which comprises V-grooves formed in the opposed surfaces of the slider 14 and the elongated hole 7, and a plurality of balls disposed between each opposed pair of the V-grooves.

In this embodiment, the slider 14 engages the retainer 4 through the linear-motion bearing 15, thereby preventing pivoting motion of the rolling element 3 in a plane including its axis. Also, because the sliders 14 and the retainer 4 are in rolling contact with each other as in the second embodiment, the plates 1 and 2 can slide relative to each other more smoothly than in the first embodiment. Further, since the sliders 14 are received in the elongated holes 7 of the retainer 4, it is possible to reduce the axial dimension of the entire shaft coupling.

In the embodiment of Figs. 7 and 8, the rolling elements of the linear-motion bearings are balls. But instead of such balls, cylindrical rollers may be arranged such that the adjacent ones are inclined in different directions. Also, instead of linear-motion bearings as shown, of which the raceways have ends, linear-motion bearings having endless raceways along which rolling elements such as steel balls circulate. Although such bearings are slightly more complicated in structure, they operate more stably and reliably because rolling elements are less likely to move to one side of the raceways.

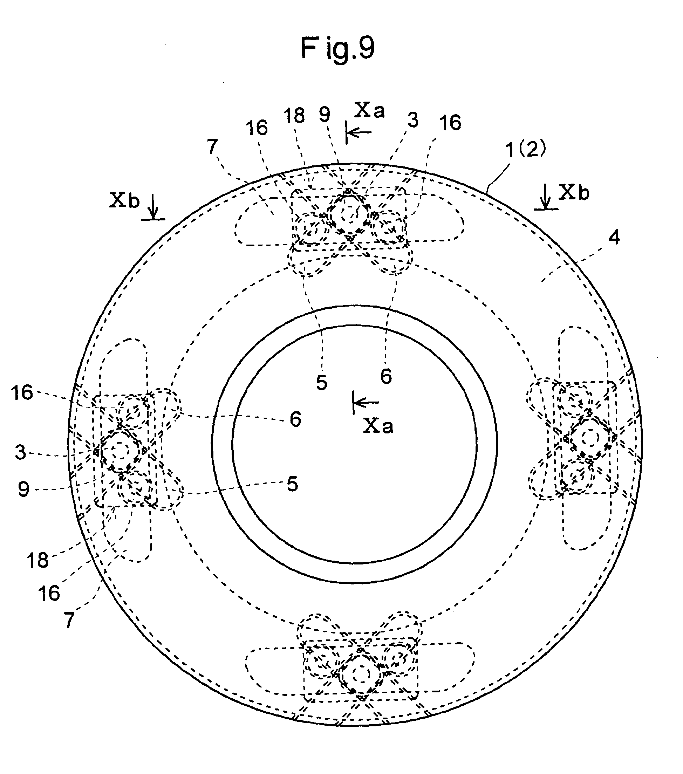

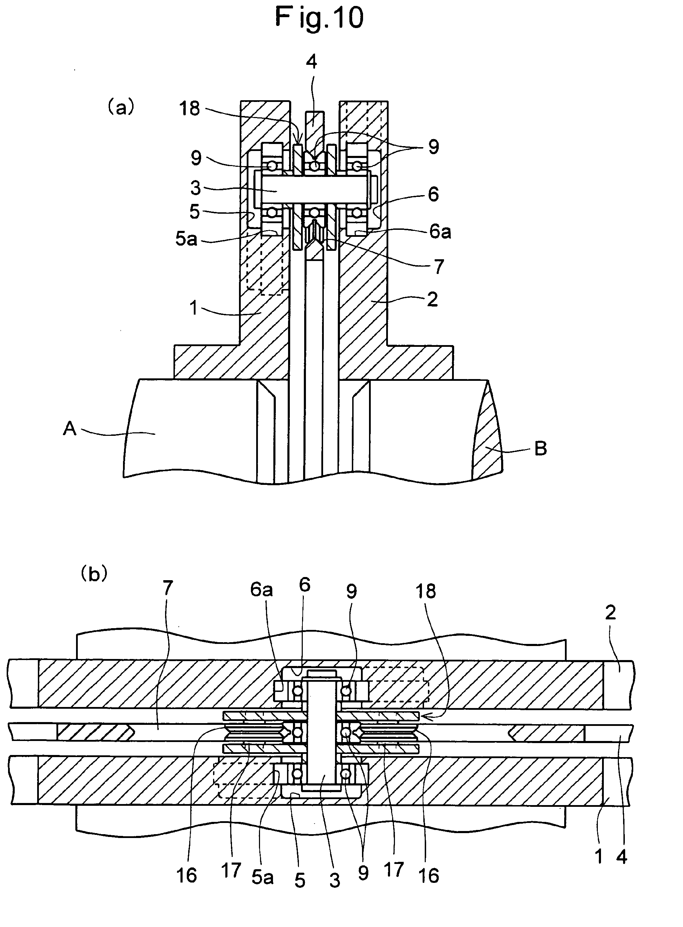

Figs. 9, 10(a) and 10(b) show the fourth embodiment. The shaft coupling of this embodiment includes rolling bearings (ball bearings or roller bearings) 16 each having an outer ring that rolls in one of the elongated holes 7 of the retainer 4, with two each of the bearings 16 provided on the respective sides of one of the rolling elements 3. Bridge members 17 each pressed into the inner ring of one of the two bearings 16 are coupled together through flat plates corresponding to the sliders 10 of the first embodiment to form a slider 18.
Since the flat plates of the slider 18, through which the bridge members 17 are joined together, do not contact the retainer 4, the guide rails 8 of the first embodiment are not necessary.

V-grooves are formed in the radially outer surfaces of the two bearings 16 of each slider 18 and in the radially outer surface of the ball bearing 9 fitted on the central portion of each rolling element 3. The V-grooves are in engagement with the convex inner surface of the elongated hole 7, thereby preventing pivoting of the rolling element in a plane including its axis. Conversely, convex portions formed on the radially outer surfaces of the bearings 16 and 9 may be engaged in a V-groove formed in the inner surface of the elongated hole. Further alternatively, the grooves may be formed by curved surfaces. The bearings 16 of the slider 18 are in contact with one of the opposed surfaces of the elongated holes 7 while the ball bearing 9 at the central portion of the rolling element 3 is in contact with the other of the opposed surfaces of the elongated holes 7. By arranging the three bearings 16 and 9 in this manner, it is possible to reduce the resistance to movement of the slider 18 relative to the retainer 4.

In this embodiment, as in the second and third embodiments, because the sliders 18 are in rolling contact with the retainer 4, and because the three bearings 16 and 9 in each of the elongated holes 7 of the retainer 4 support not only turning moments that act on the rolling element, but normal forces in the diametrical direction of the plates that are applied from the retainer 4 to the rolling element 3, it is possible to further smoothly slide the plates 1 and 2 relative to each other. Further, compared to the second and third embodiments, in which linear-motion bearings are used, dimensional accuracy and mounting accuracy required for the sliders 18 and the retainer 4 are less strict, so that the coupling of this embodiment can be manufactured at a lower cost.

## Claims

1. A shaft coupling comprising two rotary members having rotation axes respectively that are parallel to and offset from each other, and having opposed surfaces each formed with a plurality of guide grooves, said guide grooves formed in one of the opposed surfaces each intersecting the corresponding guide groove formed in the other of said opposed surfaces at a right angle, rolling elements each disposed at the intersecting portion of one of the plurality of opposed pairs of guide grooves so as to roll while being guided by the guide grooves, a retainer for preventing movement of said respective rolling elements in a diametrical direction of said rotary member, whereby power is transmitted between said rotary members through said rolling elements, **characterized in that** said rolling elements are cylindrically shaped, and have both ends thereof guided by the respective guide grooves with their central portions each passed through and held by an elongated hole formed in said retainer, and that said shaft coupling further comprises sliders each extending from the outer periphery of one of said rolling elements in the shape of a flange and engaging said retainer, thereby preventing each rolling element from pivoting in a plane including an axis of the rolling element.

2. The shaft coupling of claim 1 wherein a slide member is disposed between each of said sliders and said retainer.

3. The shaft coupling of claim 1 wherein a linear-motion bearing is disposed between each of said sliders and said retainer.

4. The shaft coupling of claim 1 wherein said sliders each comprise at least two rolling bearings each provided at one end of the corresponding rolling element, and comprising an outer ring that rolls in the corresponding elongated hole while being in engagement with an edge of the elongated hole, and an inner ring that is joined to the sliders.

5. The shaft coupling of any of claims 1 to 4 wherein rolling bearings are fitted on each of the rolling elements at both ends and central portion thereof, whereby the respective rolling elements are in rolling contact with the guide grooves of said rotary members and the elongated holes formed in the retainer through said rolling bearings.
